# EUROPEAN PATENT APPLICATION

(11) **EP 4 368 479 A1**
(43) Date of publication of application: **15.05.2024**
(21) Application number: 22206908.0
(22) Date of filing: 11.11.2022
(51) Int. Cl.: B62D 29/04

(54) **A VEHICLE BODY PANEL WITH INTEGRATED FUNCTIONAL COMPONENTS**

(71) Applicant: HELLA Saturnus Slovenija d.o.o., 1000 Ljubljana (SI)
(72) Inventor: Glatter, Willi, 1001 Ljubljana (SI); Kogovsek, Janez, 1215 Medvode (SI)
(74) Representative: Bringemeier, Ulrich Heinz

(57) **Abstract**

A vehicle body panel (21), comprising a support structure (22) and a plurality of components (23-33) fixedly attached to the support structure, the plurality of components (23-33) comprising at least two components (23-33) from the following list of components (23-33): at least one navigation unit, at least one communication unit, at least one antenna unit, at least one lighting unit, at least one signalling light unit, at least one illumination unit, at least one heating unit, at least one cleaning unit, at least one design element, at least one lighting cover lens, at least one sensor cover lens, at least one sensor housing, at least one radome, at least one safety unit, at least one camera unit, at least one parking system unit, at least one emblem unit and at least one sensor unit, in particular at least one radar sensor unit, at least one lidar unit, at least one ultrasonic sensor unit, and at least one parking sensor unit.

## Description

### Field of the disclosure

The present disclosure generally relates to vehicle body panels. Such panels may be uniquely shaped panels that provide covering for a vehicle system and may protect occupants from elements and during collisions.

The present disclosure more specifically relates to vehicle body panels with integrated components. Further, the disclosure relates to a vehicle comprising a vehicle body panel, a method for manufacturing a vehicle body panel and a method for manufacturing a vehicle.

### Background of the disclosure

An increasing number of functionalities is required at the front and other parts of a vehicle, such as, aesthetical appearance through graphical design, lighting and illumination functionality, integration of sensors, such as radar sensor, camera, lidar or parking sensors, as well as integration of systems for improving the reliability of the sensors, like heating systems, cleaning systems and mechanical and environmental protection. This increases the number of components, the complexity of the final product (e.g., front of the car panel) and the complexity of the assembly, all of which also directly increases the costs.

Document DE 10 2014 104 944 A1 discloses a radar sensor design where instead of having a customary housing for the radar sensor, the antenna(s) are covered directly with another material, such as polymer or coating, eliminating the gap between the antenna(s) and the housing.

Document "Conformal Superstrate Loaded Automotive Radar Antenna for Integration in Polymer Car Body Panels", Proceedings of the Fourth European Conference on Antennas and Propagation, 2010 by Andreas Kilian and Lorenz-Peter Schmidt describes a design and method for backmolding a radar antenna into a plastic component of a car body panel, where a 24 GHz antenna is manufactured and hot embossing of copper to a polymer foil is used. The resulting final structure from front to back comprises a paint foil, an antenna foil (with the antenna and a ground plate) and backmolded material.

Document EP 3 336 575 A1 describes an antenna as part of a radome. The radome forms a dielectric resonator, which in combination with the antenna element forms a radar sensor. The document refers to slot antennas and not patch antennas, which are mostly used now for radar sensors and use a different technology.

Document DE 10 2016 210 769 A1 describes multiple film antennas for 360° field of view coverage. The document addresses the use of several film antennas, which are produced on flat foils and attached (e.g., glued by an adhesive layer) to different parts of the vehicle to assure full coverage of the surroundings. This helps to reduce the number of full radar sensor units by placing antennas in different positions on the vehicle.

Document DE 10 2014 214 329 A1 proposes to use a decorated and heated radar cover as a radome. Foils, which are molded from behind, are used to achieve decoration, heating, isolation and filtering of radar signals. As the result the housing of the radar sensor itself serves as an external radome, which can be used as a radar unit cover or as a component, which is integrated into a bumper of the vehicle.

While the documents cited above outline possibilities to simplify the assembly of the radar sensor and the radome or to integrate the radar antenna(s) in a plastic material, the final product is either a simple component, which still needs to be assembled into a grille or a vehicle body panel and/or it does not combine all the functionalities that are desired by the manufacturers and which might even directly affect and improve the functionality of the radar system itself, e.g., a heating system.

### Summary of the disclosure

In the light of the aforementioned, it is one object of the present disclosure to provide a vehicle body panel that allows vehicle manufacturers to reduce the number of components and/or the complexity of the assembly.

It is a further object of the present disclosure to provide a vehicle comprising the vehicle body panel, a method for manufacturing the vehicle body panel and a method for manufacturing a vehicle comprising the vehicle body panel.

According to one aspect of the present disclosure, there is provided a vehicle body panel that may comprise a support structure (or carrier structure) and a plurality of components (or systems or units) fixedly (or permanently or securely or rigidly) attached to the support structure. The plurality of components may comprise at least two components from the following list of components:
- at least one navigation unit, for example, comprising at least parts of a GPS (global positioning system) navigation system or another navigation system including a transmitter and/or a receiver;
- at least one communication unit, for example, comprising at least parts of a car-to-car system or another communication system;
- at least one antenna unit, for example, comprising at least one telecommunication antenna and/or the required chipset;
- at least one lighting unit, for example, comprising at least one headlight, rear light, daylight running light and/or fog light;
- at least one signalling light unit, for example, comprising at least one flashing light, turn indicator light and/or position light;
- at least one illumination unit, for example, for aesthetical and/or legal functions, such as surface illumination and/or emblem illumination;
- at least one heating unit, for example, for improving the reliability of sensors;
- at least one cleaning unit, for example, for improving the reliability of sensors;
- at least one design element, for example, comprising at least one graphical design element, such as body colour, paint and/or metallization;
- at least one lighting cover lens;
- at least one sensor cover lens, for example, for a lidar sensor;
- at least one sensor housing;
- at least one radome;
- at least one safety unit, for example, comprising at least parts of a keyless entry system and/or another safety system;
- at least one camera unit;
- at least one parking system unit;
- at least one emblem unit, for example, comprising at least one emblem of the vehicle manufacturer and/or other manufacturers; and
- at least one sensor unit, in particular, at least one radar sensor unit (for example, for 24 GHz, 77 GHz or 79 GHz technology or any other frequency range), at least one lidar (light detection and ranging) unit, at least one ultrasonic sensor unit, and/or at least one parking sensor unit (for example, for a parking-distance-control system).

It is to be noted that other components that are not mentioned in the above list may also be fixedly attached to the support structure. Further, the lists of components that may be included in the vehicle body panel may be changed, in particular, by deleting one or more of the components mentioned in the list.

In some embodiments, the plurality of components, which are fixedly attached to the support structure, may comprise at least three or four or five components from the list of components as disclosed above.

Thanks to the integration of at least two components into the support structure, the vehicle body panel provides a complex combination of several functionalities, which so far have been considered as separate components. The vehicle body panel according to the present disclosure thus forms a "multifunctional" vehicle body panel, which reduces the number of components, the weight, the package space, the costs as well as the complexity of the assembly and improves the tolerance chain.

The vehicle may be a motor vehicle (such as a car, a truck, a bus, a mobility scooter or a motorcycle) or a wagon or a bicycle or a railed vehicle (such as a train or a tram) or a watercraft (such as a ship, a boat or an underwater vehicle) or an amphibious vehicle (such as a screw-propelled vehicle or a hovercraft) or an aircraft (such as an airplane, a helicopter or an aerostat) or a spacecraft or any other vehicle.

In some embodiments, the components, which are fixedly attached to the support structure, may be at least partly integrated into the support structure. The components may be at least partly covered by the support structure. At least some of the components may not be completely covered by the support structure. It is also possible that some of the components are fully covered by the support structure.

In some embodiments, the support structure together with the components, which are fixedly attached to the support structure, may form a single part. In particular, the entire vehicle body panel may form a single part. Integration of several components into a single vehicle body panel reduces the complexity of assembly, weight, package space and costs.

In some embodiments, at least two of the components, which are fixedly attached to the support structure, have different functions. Such a multifunctional vehicle body panel may, for example, comprise a radar unit, headlights and a car-to-car communication unit or any other functional units.

In some embodiments, the support structure may be a molded structure. The support structure may thus comprise a mold material, such as plastic or another appropriate mold material. The at least two components may be integrated into the mold material. Instead of molding, other appropriate technologies may also be used for the integration of the components into the support structure.

In some embodiments, the vehicle body panel may further comprise a socket and/or a cable, in particular exactly one socket and/or exactly one cable, through which at least two of the components integrated into the support structure can be accessed. The vehicle body panel with the integrated components allows to use a simplified electrical connection to the vehicle. The components can be connected to the vehicle system or CPU (central processing unit) and/or a power supply via only one cable/socket.

In some embodiments, the vehicle body panel may be configured to be mounted on or attached to a vehicle's front or rear or side or top. The top of the vehicle may, in particular, be a roof, an engine hood or a boot lid. The vehicle body panel may include mounting means by which the panel can be attached to the vehicle.

A further aspect of the present disclosure pertains to a vehicle that comprises a vehicle body panel as discussed in the present disclosure.

In some embodiments, the vehicle body panel may be mounted on a front or a rear or a side or a top of the vehicle.

According to a further aspect of the present disclosure, there is provided a method for manufacturing a vehicle body panel as discussed in the present disclosure. A molding process may be used to produce the support structure and to fixedly attach the plurality of components to the support structure. Any suitable molding technology may be used for the molding process, for example inmolding, overmolding, 2K molding and/or more than 2K molding. The integration of the functional components may occur in one molding step or two or more molding steps.

The components may be produced with any known technological procedure and applied to the molding process as inserts, foils, or via additional technological steps during the molding process. For example, an antenna may be produced on a foil and inmolded afterwards, or it may be hot-stamped or printed on a plastic component after a first molding step and overmolded afterwards.

In some embodiments, the components may be at least partially covered by a mold material during the molding process. In some embodiments, at least one of the components may be fully covered by the mold material.

A further aspect of the present disclosure pertains to a method for manufacturing a vehicle. A vehicle body panel as discussed in the present disclosure may be mounted on the vehicle.

In some embodiments, the vehicle body panel may be mounted on the vehicle as a single part.

### Brief description of the drawings

The disclosure will now be described by way of non-limiting examples only, with reference to the accompanying drawings, in which
Fig. 1 shows a schematic view of an exemplary vehicle body panel; and
Fig. 2 shows a schematic view of another exemplary vehicle body panel mounted the front side of a car.

### Detailed description of the figures

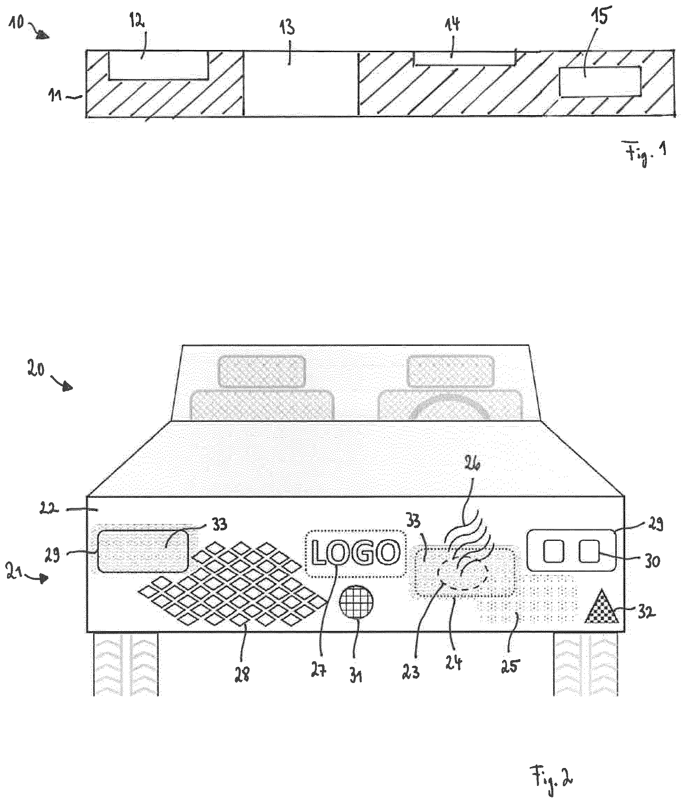

Fig. 1 schematically illustrates an exemplary vehicle body panel 10 including a support structure 11 made of mold material and various functional components 12-15 integrated in the support structure 11. The support structure 11 together with the integrated components 12-15 form a single part. The components 12-15 may have the same or different functionalities and may be selected from the following components: a navigation unit, a communication unit, an antenna unit, a lighting unit, a signalling light unit, an illumination unit, a heating unit, a cleaning unit, a design element, a lighting cover lens, a sensor cover lens, a sensor housing, a radome, a safety unit, a camera unit, a parking system unit, a one emblem unit and a sensor unit. As an example, the components 12-15 may comprise a radar unit, headlights and a car-to-car communication unit.

The vehicle body panel 10 is manufactured by a molding process. Any appropriate molding technology may be used for the molding process, for example inmolding, overmolding, 2K molding and/or more than 2K molding. One or more surfaces of the components 12-15 may be exposed and not coated by the mold material. Some of the components, such as the component 15 in Fig. 1, may also be fully covered so that all surfaces of the component are coated by the mold material.

Fig. 2 schematically illustrates an exemplary car 20 with a multifunctional car body panel 21 mounted at the front of the car 20. Similar to the vehicle body panel 10 described above, the car body panel 21 comprises a support structure 22 made of mold material and the following functional components 23-33:
- 23: radar antenna
- 24: radome
- 25: graphical design, such as body colour
- 26: graphical design, such as paint, metallization
- 27: (illuminated) emblem or radome
- 28: surface illumination
- 29: cover lense for lighting
- 30: headlamp
- 31: cover lens for lidar
- 32: car-to-car communication module
- 33: heating unit

As Fig. 2 shows, several functionalities required at the front part of the vehicle 20 are directly and seamlessly integrated into the multifunctional car body panel 21, thus reducing the number of components, the complexity of the assembly and improving the tolerance chain.

While this disclosure provides multiple exemplary embodiments, it will be understood by those skilled in the art that various changes may be made and equivalents may be substituted for elements thereof without departing from the scope of this disclosure. In addition, many modifications may be made to adapt a particular situation or material to the teachings of this disclosure without departing from the essential scope thereof. Therefore, it is intended that the invention, as defined in the appended claims, not be limited to any particular embodiment disclosed herein, but that the invention will include all embodiments falling within the scope of the claims. Also, in the drawings and the description, there have been disclosed exemplary embodiments and, although specific terms may have been employed, they are unless otherwise stated used in a generic and descriptive sense only and not for purposes of limitation. Moreover, the use of the terms a, an, etc. does not denote a limitation of quantity, but rather denotes the presence of at least one of the referenced item unless otherwise explicitly indicated.

## Claims

1. A vehicle body panel (10, 21), comprising a support structure (11, 22) and a plurality of components (12-15, 23-33) fixedly attached to the support structure, the plurality of components (12-15, 23-33) comprising at least two components (12-15, 23-33) from the following list of components (12-15, 23-33): at least one navigation unit, at least one communication unit, at least one antenna unit, at least one lighting unit, at least one signalling light unit, at least one illumination unit, at least one heating unit, at least one cleaning unit, at least one design element, at least one lighting cover lens, at least one sensor cover lens, at least one sensor housing, at least one radome, at least one safety unit, at least one camera unit, at least one parking system unit, at least one emblem unit and at least one sensor unit, in particular at least one radar sensor unit, at least one lidar unit, at least one ultrasonic sensor unit, and at least one parking sensor unit.

2. The vehicle body panel (10, 21) of claim 1, wherein the components (12-15, 23-33), which are fixedly attached to the support structure (11, 22), are at least partly integrated in the support structure (11, 22).

3. The vehicle body panel (10, 21) of claim 1 or 2, wherein the support structure (11, 22) together with the components (12-15, 23-33), which are fixedly attached to the support structure (11, 22), form a single part, in particular, the vehicle body panel (10, 21) forms a single part.

4. The vehicle body panel (10, 21) of anyone of claims 1 to 3, wherein at least two of the components (12-15, 23-33), which are fixedly attached to the support structure (11, 22), have different functions.

5. The vehicle body panel (10, 21) of anyone of claims 1 to 4, wherein the support structure (11, 22) is a molded structure.

6. The vehicle body panel (10, 21) of anyone of claims 1 to 5, further comprising a socket and/or a cable, in particular exactly one socket and/or exactly one cable, through which at least two of the components (12-15, 23-33) can be accessed.

7. The vehicle body panel (10, 21) of anyone of claims 1 to 6, wherein the vehicle body panel (10, 21) is configured to be mounted on a front or a rear or a side or a top of a vehicle (20).

8. A vehicle (20) comprising a vehicle body panel (10, 21) of anyone of claims 1 to 7.

9. The vehicle (20) of claim 8, wherein the vehicle body panel (10, 21) is mounted on a front or a rear or a side or a top of the vehicle (20).

10. A method for manufacturing a vehicle body panel (10, 21) of anyone of claims 1 to 7, wherein a molding process, in particular an inmolding and/or overmolding and/or 2K molding and/or more than 2K molding process, is used to produce the support structure (11, 22) and to fixedly attach the plurality of components (12-15, 23-33) to the support structure (11, 22).

11. The method of claim 10, wherein the components (12-15, 23-33) are at least partially covered by a mold material during the molding process.

12. A method for manufacturing a vehicle (20), wherein a vehicle body panel (10, 21) of anyone of claims 1 to 7 is mounted on a vehicle (20).

13. The method of claim 12, wherein the vehicle body panel (10, 21) is mounted on the vehicle (20) as a single part.
